# EUROPÄISCHE PATENTSCHRIFT

(11) **EP 2 156 996 B1**
(45) Veröffentlichungstag und Bekanntmachung des Hinweises auf die Patenterteilung: **19.10.2011**
(21) Anmeldenummer: 08014648.3
(22) Anmeldetag: 18.08.2008
(51) Int. Cl.: B60R 21/26, B60R 21/217

(54) **Gasanschluss**
Gas connection
Raccordement de gaz

(43) Veröffentlichungstag der Anmeldung: 24.02.2010
(73) Patentinhaber: Delphi Technologies, Inc., Troy, Michigan 48007 (US)
(72) Erfinder: Guthke, Detlev, 58089 Hagen (DE); Maiwald, Helmut, 51515 Kürten (DE)
(74) Vertreter: Denton, Michael John

(56) Entgegenhaltungen:
- DE-U1- 9 013 131
- FR-A- 2 809 471
- US-A1- 2006 061 075

## Beschreibung

Die Erfindung betrifft einen Gasanschluss zur gasdichten Anbindung eines Gasgenerators an eine flexible Gasleitung einer Luftsackanordnung für Kraftfahrzeuge.

Die Erfindung betrifft außerdem eine Gasleitungsanordnung für in Kraftfahrzeugen eingesetzte Luftsackanordnungen, die wenigstens einen aufblasbaren Luftsack und zumindest einen im am Fahrzeug montierten Zustand entfernt von dem Luftsack angeordneten Gasgenerator zum Aufblasen des Luftsacks umfassen.

Des Weiteren betrifft die Erfindung eine Luftsackanordnung für Kraftfahrzeuge mit wenigstens einem aufblasbaren Luftsack und zumindest einem Gasgenerator zum Aufblasen des Luftsacks.

Gasleitungsanordnungen sind insbesondere dann von Interesse, wenn der Gasgenerator nicht in unmittelbarer Nähe zum Luftsack angeordnet werden kann oder soll. Durch eine zwischen dem Gasgenerator und dem Luftsack vorgesehene Gasleitung ergibt sich prinzipiell eine höhere Flexibilität bei der Konzeption und Montage der Luftsackanordnung im Fahrzeug.

Es ist grundsätzlich bekannt, in derartigen Gasleitungsanordnungen flexible gasdichte Gasleitungen einzusetzen, mit denen das Gas vom Gasgenerator zum aufzublasenden Luftsack geführt werden kann. Ein Vorteil einer derartigen flexiblen Gasleitung besteht darin, dass sie im Montagezustand aufgrund ihrer dann flachen und somit gewissermaßen zweidimensionalen Konfiguration extrem wenig Platz benötigt. Der erforderliche Strömungsquerschnitt für das Gas ergibt sich im Bedarfsfall durch die Wirkung des Gasgenerators gewissermaßen automatisch von selbst, indem der Gasgenerator die Gasleitung aus der flachen Montagekonfiguration in eine Aufblaskonfiguration überführt, d.h. die Gasleitung wird gewissermaßen aufgeblasen, entfaltet, aufgedrückt bzw. aufgeweitet. Im Rahmen dieser Anmeldung umfasst der Begriff "flexibel" alle solchen Ausgestaltungen der Gasleitung, die es ermöglichen, die Gasleitung durch die Wirkung des Gasgenerators aus der erwähnten flachen Montagekonfiguration in die erwähnte Aufblaskonfiguration zu überführen. Insbesondere umfasst der Begriff "flexibel" auch biegsame und/oder weiche Ausgestaltungen der Gasleitung.

Bevorzugt werden derartige flexible gasdichte Gasleitungen der Einfachheit halber in Form von einfachen Halbzeugen realisiert. Beispielsweise sind derartige Gasleitungen als Schläuche ausgebildet. Als Material für die Gasleitung kommt insbesondere ein Gewebe- oder Textilmaterial in Frage. Dabei ist es möglich, dass die Gasleitung aus dem gleichen Material wie die Hülle des Luftsacks oder aus einem gleichartigen Material hergestellt ist. Grundsätzlich ist es auch möglich, für die Gasleitung ein insbesondere flexibles, biegsames und/oder weiches Kunststoffmaterial vorzusehen.

Eine besondere Bedeutung kommt in derartigen Gasleitungsanordnungen der Anbindung des Gasgenerators an die Gasleitung zu, und zwar insbesondere vor dem Hintergrund, dass beim Auslösen des Gasgenerators durch das freigegebene Gas in vergleichsweise kurzer Zeit relativ hohe Drücke entstehen. Diese Drücke stellen hohe Anforderungen an die Festigkeit und an die Gasdichtigkeit aller an der Gasführung beteiligten Komponenten. Besonders hohe Anforderungen werden dabei an die jeweiligen Schnittstellen gestellt. Eine derartige Schnittstelle stellt die Anbindung des Gasgenerators an die Gasleitung dar.

Dokument DE9013131 U beschreibt einen Gasanschluss zur Anbindung eines Gasgenerators an eine starre Gasleitung einer Luftsackanordnung, wobei in einer die Gasleitung bildenden Hülle eine Öffnung ausgebildet ist, in die der Gasgenerator mit einem Gasaustrittsabschnitt hineinragt, und wobei eine Halteeinrichtung vorgesehen ist, welche den Gasgenerator im Bereich der Anbindung an die Gasleitung umgibt und am Gasgenerator fixiert ist.

Aufgabe der Erfindung ist es, eine Möglichkeit zu schaffen, in konstruktiv einfacher und kostengünstig realisierbarer Weise eine Möglichkeit zur gasdichten Anbindung eines Gasgenerators an eine flexible Gasleitung insbesondere der vorstehend erläuterten Art zu schaffen.

Die Lösung dieser Aufgabe erfolgt durch die Merkmale des Anspruchs 1, der auf einen Gasanschluss zur gasdichten Anbindung eines Gasgenerators an eine flexible Gasleitung gerichtet ist. Anspruch 14 betrifft eine Gasleitungsanordnung mit wenigstens einem derartigen Gasanschluss. Eine Luftsackanordnung mit zumindest einer derartigen Gasleitungsanordnung ist Gegenstand des Anspruchs 15.

Bei dem erfindungsgemäßen Gasanschluss ist in einer die Gasleitung bildenden Hülle eine Öffnung ausgebildet, in die der Gasgenerator mit einem, insbesondere im Wesentlichen eine kreiszylindrische Grundform aufweisenden, Gasaustrittsabschnitt hineinragt, wobei eine Halteeinrichtung vorgesehen ist, welche die Gasleitung im Bereich der Anbindung der Gasgenerators an die Gasleitung umgibt und am Gasgenerator fixiert ist.

Das Vorsehen einer in der Hülle der Gasleitung ausgebildeten Öffnung zum Einführen des Gasaustrittsabschnitts des Gasgenerators bedeutet nur einen denkbar geringen Aufwand zur Anbindung eines Gasgenerators. Außerdem hat diese Vorgehensweise den Vorteil, dass die durch die Einführöffnung bedingte Schwächung der Struktur der Gasleitung minimiert ist, d.h. die erfindungsgemäße Anbindung des Gasgenerators bedeutet gewissermaßen einen "minimal invasiven" Eingriff in die Integrität der Gasleitung. Diese gleichwohl vorhandene Schwächung der Gasleitung wird erfindungsgemäß durch die Halteeinrichtung zumindest teilweise ausgeglichen, welche dadurch, dass sie die Gasleitung im Bereich der Anbindung des Gasgenerators umgibt und am Gasgenerator fixiert ist, eine sonst mögliche Ausdehnung der Gasleitung im Bereich der Gasgeneratoranbindung verhindert. Die Halteeinrichtung sorgt nicht nur dafür, dass die Gasleitung überhaupt auf dem Gasgenerator festgehalten wird. Darüber hinaus stellt die Halteeinrichtung auch sicher, dass im Bereich der Anbindung des Gasgenerators die Gasleitung dann, wenn der Luftsack aufgeblasen wird, d.h. in der Gasleitung und insbesondere im Bereich der Anbindung des Gasgenerators relativ hohe Drücke herrschen, eine Aufblaskonfiguration einnimmt, welche die Gasleitung einnehmen würde, wenn die die Gasleitung bildende Hülle nicht durch die Einführöffnung für den Gasaustrittsabschnitt des Gasgenerators "verletzt" wäre. Die Halteeinrichtung stellt somit gewissermaßen den ursprünglichen "unverletzten" oder "ungeschwächten" Zustand wieder her.

In Abhängigkeit von den jeweiligen Gegebenheiten kann eine ausreichende Gasdichtigkeit bereits dadurch sichergestellt werden, dass zum Einführen des Gasaustrittsabschnitts des Gasgenerators lediglich die genannte Öffnung in der Hülle der Gasleitung ausgebildet wird. Diese Öffnung muss lediglich gewährleisten, dass der Gasaustrittsabschnitt in die Gasleitung hineingesteckt werden kann. Dabei kann die Öffnung derart ausgebildet sein, dass sie sich beim Einführen des Gasaustrittsabschnitts aufweitet, so dass in radialer Richtung wirksame Rückstellkräfte für eine Abdichtung der Hindurchführung, also im Bereich der Schnittstelle zwischen dem die Öffnung begrenzenden Rand und der Außenseite des Gasaustrittsabschnitts, sorgen.

Bevorzugte Weiterbildungen der Erfindung sind auch in den abhängigen Ansprüchen, der Beschreibung sowie der Zeichnung angegeben. Bevorzugt weist die Gasleitung im aufgeblasenen Zustand zumindest im Bereich der Anbindung des Gasgenerators einen im Wesentlichen kreisförmigen Querschnitt auf. Insbesondere wird, wie bereits erwähnt, die Gasleitung von einem Schlauch gebildet.

Die Anordnung der Halteeinrichtung erfolgt bevorzugt derart, dass die Halteeinrichtung über einen Umfangsbereich von mehr als etwa 90°, vorzugsweise von mehr als etwa 180°, insbesondere bevorzugt von mehr als etwa 270° an der in einer Aufblaskonfiguration befindlichen Gasleitung anliegt.

Die Halteeinrichtung kann als Fangband und/oder Manschette ausgebildet sein. Beispielsweise umfasst die Halteeinrichtung einen in einer flachen Ausgangskonfiguration rechteckigen oder streifenförmigen Materialabschnitt, der so um die Gasleitung herumgelegt ist, dass seine beiden freien Endbereiche im Bereich der Öffnung am außerhalb der Gasleitung gelegenen Bereich des Gasaustrittsabschnitts bzw. Gasgenerators zu liegen kommen.

Insbesondere ist erfindungsgemäß vorgesehen, dass zur Fixierung der Halteeinrichtung am Gasgenerator eine Fixiereinrichtung vorgesehen ist, die außerhalb der Gasleitung im Bereich der Öffnung unter Zwischenlage der Halteeinrichtung den Gasaustrittsabschnitt des Gasgenerators zumindest über einen Teilumfangsbereich umschließt.

Der Abstand dieser Fixiereinrichtung von der Öffnung kann zur Maximierung des Umfangsbereiches, über den die Halteeinrichtung an der in einer Aufblaskonfiguration befindlichen Gasleitung anliegt, minimiert sein. Insbesondere kann vorgesehen sein, dass der Abstand der Fixiereinrichtung von der Öffnung veränderbar und/oder während der Montage innerhalb bestimmter Grenzen frei wählbar ist.

Die Wirkungsweise der Fixiereinrichtung kann man sich insbesondere derart vorstellen, dass einerseits die Halteeinrichtung von der Öffnung weg entlang des außerhalb der Gasleitung gelegenen Bereiches des Gasaustrittsabschnitts weggezogen wird, während andererseits die Fixiereinrichtung unter Zwischenlage der Halteeinrichtung längs dieses äußeren Bereiches des Gasaustrittsabschnitts in die entgegengesetzte Richtung, also in Richtung der Öffnung und insbesondere bis an die Gasleitung heran, geschoben wird. Hierdurch wird die die Gasleitung umgebende Halteeinrichtung dazu gezwungen, sich zumindest im Wesentlichen über den gesamten in Umfangsrichtung zur Verfügung stehenden Bereich außen an die in einer Aufblaskonfiguration befindliche Gasleitung anzulegen.

Insbesondere ist vorgesehen, dass die Fixiereinrichtung als Schelle oder Manschette ausgebildet ist.

Des Weiteren ist vorzugsweise vorgesehen, dass der Gasaustrittsabschnitt des Gasgenerators einen innerhalb der Gasleitung befindlichen, insbesondere radial vorspringenden, Anschlag trägt, der mit der Fixiereinrichtung eine Klemm- oder Spanneinrichtung zumindest für den die Öffnung begrenzenden Randbereich der die Gasleitung bildenden Hülle und für die Halteeinrichtung bildet. Dieser auch als Stopper bezeichnete Anschlag kann einstückig mit dem Gasaustrittsabschnitt ausgebildet und dabei insbesondere als umlaufender Dichtwulst oder Flansch vorgesehen sein. Alternativ kann es sich bei dem Anschlag um ein separates, insbesondere ringförmiges Element handeln, das in axialer Richtung ausreichend fest auf den Gasaustrittsabschnitt aufgeschoben oder aufgesteckt ist. Gemeinsam mit der Fixiereinrichtung sorgt dieser Anschlag für eine hohe Positionsgenauigkeit der eingeklemmten oder eingespannten Komponenten, bei denen es sich zumindest um den die Öffnung begrenzenden Randbereich der Gasleitung und um die Halteeinrichtung handelt.

Wie eingangs bereits angedeutet, kann die Öffnung bezüglich des Gasaustrittsabschnitts des Gasgenerators unterdimensioniert sein.

Zusätzlich zu dem die Hülle der Gasleitung bildenden Material kann die Hülle im die Öffnung begrenzenden Randbereich eine Dichtungsanordnung umfassen, welche die Hindurchführung des Gasaustrittsabschnitts des Gasgenerators durch die Öffnung abdichtet.

Zur Anpassung an die äußere Form der aufgeblasenen Gasleitung kann die Dichtungsanordnung verformbar sein. Hierdurch kann sich die Dichtungsanordnung an die äußere Form der Gasleitung anpassen, welche die Gasleitung in der Aufblaskonfiguration annimmt.

In einem bevorzugten Ausführungsbeispiel ist die Dichtungsanordnung als, insbesondere flacher, Dichtring ausgebildet, der radial innen an der Außenseite des Gasaustrittsabschnitts des Gasgenerators anliegt und in radialer Richtung mit dem die Öffnung begrenzenden Randbereich der Hülle überlappt.

Ein derartiger Dichtring ist denkbar einfach und kostengünstig herstellbar. Aufgrund der Überlappung dieser Dichtung mit dem Randbereich der Hülle kann der Randbereich bis an den Gasaustrittsabschnitt des Gasgenerators heranreichen. Die Öffnung kann daher besonders klein gehalten werden.

Des Weiteren kann erfindungsgemäß vorgesehen sein, dass die Dichtungsanordnung in radialer Richtung betrachtet zwischen dem Rand der Öffnung und der Außenseite des Gasaustrittsabschnitts angeordnet ist, wobei insbesondere die Dichtungsanordnung an ihrer radialen Außenseite zur Aufnahme des die Öffnung begrenzenden Randbereiches ausgebildet ist.

Ferner kann vorgesehen sein, dass die Dichtungsanordnung einen Abschnitt aufweist, der durch eine axiale Verformungsbewegung in radialer Richtung erweiterbar ist. Insbesondere ist die Dichtungsanordnung nach Art eines Spreizdübels ausgebildet.

Generell können die erfindungsgemäßen Dichtungsanordnungen sowohl einteilig als auch mehrteilig ausgeführt sein.

Des Weiteren kann erfindungsgemäß vorgesehen sein, dass die Hülle der Gasleitung im die Öffnung begrenzenden Randbereich zusätzlich zu dem die Hülle bildenden Material eine Stabilisierungseinrichtung für den Randbereich umfasst, die insbesondere dem Randbereich eine erhöhte Festigkeit und/oder Steifigkeit verleiht. Hierdurch kann das Zusammenwirken des Randbereiches mit der Halteeinrichtung und - sofern vorhanden - den übrigen vorstehend erläuterten Komponenten weiter verbessert werden. Insbesondere kann durch eine derartige Stabilisierungseinrichtung erreicht werden, dass der Randbereich in allen Richtungen nur eine relativ geringe Dehnung zulässt.

Die Stabilisierungseinrichtung kann wenigstens einen zusätzlichen, insbesondere als ringförmige Lochverstärkung ausgebildeten, Materialabschnitt umfassen, der mit der Hülle verbunden ist. Diese Verbindung kann insbesondere durch Verkleben erfolgen.

Dieser Materialabschnitt kann aus dem gleichen Material wie die Hülle der Gasleitung hergestellt sein, insbesondere aus einem Gewebematerial. Dabei kann insbesondere eine innerhalb der Gewebestruktur des Materialabschnitts vorhandene Vorzugsrichtung gegenüber einer entsprechenden Vorzugsrichtung der Gasleitungshülle verdreht sein, beispielsweise um 45°.

Bei der erfindungsgemäßen Gasleitungsanordnung, die - wie bereits erwähnt - wenigstens einen Gasanschluss der hier angegebenen Art umfasst, ist insbesondere vorgesehen, dass die Gasleitung zumindest im Wesentlichen außerhalb des Luftsacks verläuft, eine freie Wegstrecke zwischen dem Gasgenerator und dem Luftsack überbrückt und zum Aufblasen des Luftsacks mittels des Gasgenerators dient.

Die ebenfalls bereits erwähnte Luftsackanordnung für Kraftfahrzeuge, die wenigstens einen aufblasbaren Luftsack und zumindest einen Gasgenerator zum Aufblasen des Luftsacks umfasst, ist mit zumindest einer derartigen Gasleitungsanordnung versehen.

Vorzugsweise ist die Gasleitungsanordnung als ein Gasverteiler ausgebildet, mit dem wenigstens zwei Luftsäcke, insbesondere im Wesentlichen gleichzeitig, aufblasbar sind, wobei die Gasleitung wenigstens zwei von dem Bereich der Anbindung des Gasgenerators ausgehende Gasausbreitungswege bereitstellt.

Die Erfindung wird im Folgenden beispielhaft unter Bezugnahme auf die Zeichnung beschrieben.

Es zeigen:
- Fig. 1: schematisch zwei Ansichten eines Ausführungsbeispiels einer Luftsackanordnung mit einem erfindungsgemäßen Gasanschluss,
- Fig. 2: eine Dichtungsanordnung des Gasanschlusses von Fig. 1,
- Fig. 3: schematisch eine Möglichkeit zur Ausbildung einer Öffnung in einer Gasleitung des erfindungsgemäßen Gasanschlusses,
- Fig. 4: schematisch eine Möglichkeit zur Anordnung einer Stabilisierungseinrichtung an einer Gasleitung des erfindungsgemäßen Gasanschlusses,
- Fig. 5: Ansichten entsprechend Fig. 1 eines weiteren Ausführungsbeispiels eines erfindungsgemäßen Gasanschlusses,
- Fig. 6: Ansichten entsprechend Fig. 1 eines weiteren Ausführungsbeispiels eines erfindungsgemäßen Gasanschlusses,
- Fig. 7: eine Dichtungsanordnung des Gasanschlusses von Fig. 6,

- Fig. 8: Ansichten entsprechend Fig. 1 eines weiteren Ausführungsbeispiels eines erfindungsgemäßen Gasanschlusses,
- Fig. 9: eine Dichtungsanordnung des Gasanschlusses von Fig. 8, und
- Fig. 10: die Dichtungsanordnung von Fig. 9 in einem Vormontage-Zustand am Gasaustrittsabschnitt des Gasgenerators von Fig. 9.

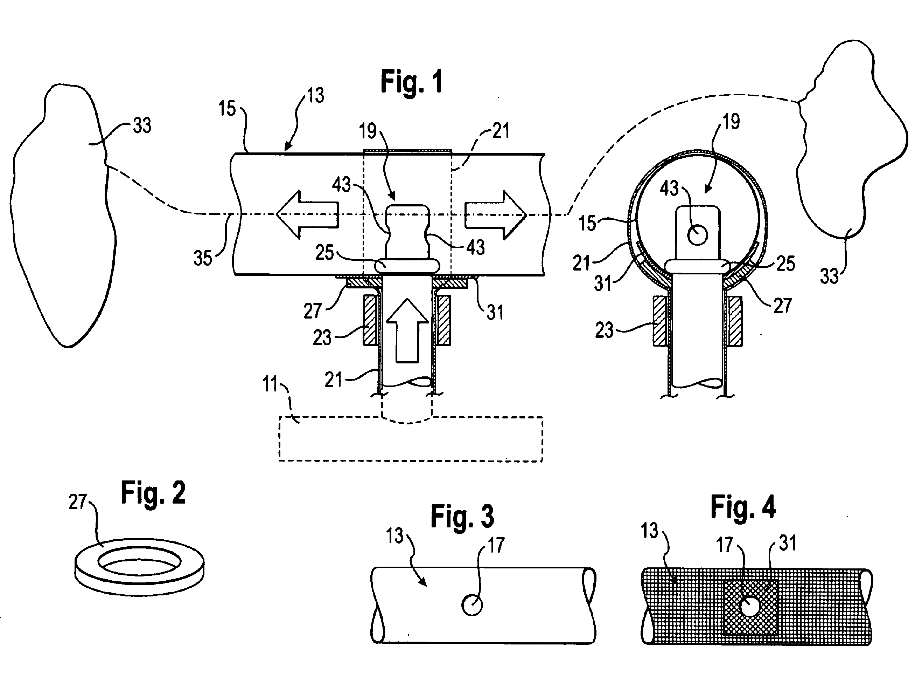

Die nachstehend beschriebenen, in den Fig. 1, 5, 6 und 8 jeweils in einem Längsschnitt (links) und einem senkrecht zu einer Längsachse 35 verlaufenden Querschnitt (rechts) schematisch dargestellten Ausführungsbeispiele der Erfindung haben gemeinsam, dass ein lediglich in Fig. 1 durch eine gestrichelte Linie angedeuteter Gasgenerator 11 mit einem im Wesentlichen zylindrischen Gasaustrittsabschnitt 19, der im Folgenden auch einfach als Endstück bezeichnet wird, in eine als Schlauch ausgebildete flexible Gasleitung 13 eingesteckt ist. Diese Anbindung des Gasgenerators 11 an die Gasleitung 13 dient dazu, mittels der Gasleitung 13 einen oder mehrere Luftsäcke 33 aufzublasen. Die im Folgenden auch als Gasanschluss bezeichnete, erfindungsgemäße Anbindung des Gasgenerators 11 an die Gasleitung 13 ist somit Bestandteil einer Gasleitungsanordnung für in Kraftfahrzeugen eingesetzte Luftsackanordnungen.

In Fig. 1 sind schematisch zwei mit der Gasleitung 13 verbundene Luftsäcke 33 angedeutet. Die dargestellte Gasleitungsanordnung dient somit als ein Gasverteiler, mit dem die beiden Luftsäcke 33 gleichzeitig aufgeblasen werden können, wobei hierfür lediglich ein einziger Gasgenerator 11 und insbesondere ein einziger Gasaustrittsabschnitt 19 des Gasgenerators 11 erforderlich ist.

Der Gasaustrittsabschnitt 19 ist mit zwei in entgegengesetzte Richtungen wirksamen Gasaustrittsöffnungen 43 versehen. Es handelt sich hierbei folglich um einen so genannten schubneutralen Gasgenerator 11.

Die hier beschriebenen Ausführungsbeispiele stimmen ferner darin überein, dass in einer die schlauchartige Gasleitung 13 bildenden Hülle 15 eine Öffnung 17 (vgl. Fig. 3 und 4) ausgebildet ist, durch die das Endstück 19 des Gasgenerators 11 hindurch gesteckt ist. Wie die Fig. 3 und 4 beispielhaft andeuten, kann es sich bei der Öffnung 17 in der Gasleitung 13 um ein kreisrundes Loch handeln, das in das die Hülle der Gasleitung 13 bildende Material geschnitten ist, d.h. es erfolgt durch die Ausbildung dieser Öffnung 17 eine Materialwegnahme. Es hat sich gezeigt, dass eine Materialwegnahme zur Bildung der, bevorzugt kreisrunden, Öffnung 17 eine unkritische Dehnung der Hülle 15 beim Einstecken des Endstücks 19 des Gasgenerators 11 zulässt, eine Faltenbildung hierbei aber nicht erfolgt. Versuche haben ergeben, dass sich Falten, die beim Einstecken des Endstücks 19 des Gasgenerators 11 in eine anders hergestellte Öffnung 17 bilden, äußerst negativ auswirken würden.

Das Endstück 19 des Gasgenerators 11 ist mit einem einstückig ausgebildeten, umlaufenden Wulst 25 versehen, der in radialer Richtung vorsteht und als in axialer Richtung wirksamer Anschlag oder Stopper dient. Dieser Anschlag 25 ist derart ausgebildet, dass das Einführen des Endstücks 19 durch die in der Gasleitungshülle 15 ausgebildete Öffnung 17 problemlos möglich ist, gleichzeitig aber im Bereich der Öffnung 17 an der Innenseite der Gasleitung 13 eine umlaufende Anlagemöglichkeit für weitere Komponenten besteht, auf die nachstehend näher eingegangen wird.

Bei den erwähnten weiteren Komponenten handelt es sich unter anderem um eine als Stabilisierungseinrichtung 31 dienende ringförmige Lochverstärkung, die von einem zusätzlichen, z.B. kreisringförmigen, quadratischen oder rechteckigen Materialabschnitt gebildet wird, der auf die Außenseite der Gasleitungshülle 15 geklebt ist. Alternativ oder zusätzlich können die Lochverstärkung 31 und die Gasleitungshülle 15 auch miteinander vernäht werden. Wie eingangs bereits erwähnt, bestehen die Gasleitungshülle 15 und die Lochverstärkung 31 insbesondere aus dem gleichen Material, bei dem es sich insbesondere um ein Textil- oder Gewebematerial handelt. Es ist bevorzugt, wenn in den Gewebestrukturen enthaltene Vorzugsrichtungen der Gasleitungshülle 15 einerseits und der Lochverstärkung 31 andererseits gegeneinander verdreht sind, insbesondere um 45°, wie es Fig. 4 zeigt. Der Innendurchmesser der Lochverstärkung 31 sowie die Breite des die Lochverstärkung 31 bildenden Materialringes sind insbesondere von der Größe der in der Gasleitungshülle 15 ausgebildeten Öffnung 17 sowie von den Abmessungen der übrigen Komponenten abhängig und prinzipiell frei wählbar. Es ist auch möglich, mehr als eine Lochverstärkung vorzusehen. Beispielsweise können zwei Lochverstärkungen übereinander liegend mit der Hülle 15 verbunden werden. Die in den Gewebestrukturen enthaltenen Vorzugsrichtungen der Lochverstärkungen können dann z.B. gegeneinander um 45° und jeweils bezüglich der Vorzugsrichtung der Hülle 15 um 22,5° verdreht sein.

Ferner ist bei jedem Ausführungsbeispiel eine als Halteeinrichtung wirksame, im Folgenden auch als Fangband bezeichnete Manschette 21 vorgesehen. Bei diesem Fangband 21 handelt es sich um einen flexiblen Materialstreifen, der im Bereich der Anbindung des Gasgenerators 11 um die Gasleitung 13 herumgelegt ist und mittels einer separaten Fixiereinrichtung 23 in Form einer Schelle am Gasgenerator 11, genauer gesagt am außerhalb der Gasleitung 13 liegenden Bereich des Gasgenerator-Endstücks 19, fixiert ist.

Wie insbesondere die Querschnittsdarstellungen senkrecht zur Längsachse 35 der Gasleitung 13 in den Fig. 1, 5, 6 und 8 zeigen, sorgt die Schelle 23 dafür, dass das Fangband 21 der äußeren Form der in der Aufblaskonfiguration befindlichen Gasleitung 13 folgt, und zwar über den maximal möglichen Umfangswinkelbereich. Die in Umfangsrichtung gemessene Länge des Fangbandes 21 ist derart gewählt, dass beim Aufblasen der Luftsäcke 33, wenn innerhalb der Gasleitung 13 relativ hohe Innendrücke herrschen, sich die Gasleitung 13 im Bereich der Anbindung des Gasgenerators 11 so verhält, als wäre die Gasleitung 13 nicht durch die Öffnung 17 für das Gasgenerator-Endstück 19 geschwächt worden. Das mittels der Schelle 23 fixierte Fangband 21 stellt somit gewissermaßen die alte Stabilität der Gasleitung im Bereich der Gasgeneratoranbindung wieder her. Die "Verletzung" der bezogen auf die Umfangsrichtung gegebenen geschlossenen Struktur der Gasleitung 13 durch die Herstellung der Öffnung 17 wird somit durch das fixierte Fangband 21 kompensiert.

Das Fangband 21 kann aus dem gleichen Material wie die Gasleitungshülle 15 bestehen, wobei grundsätzlich auch andere zum Einsatz kommen können. Diese Materialien können flexibel, biegsam und/ oder weich sein, wobei dies aber nicht zwingend ist. Prinzipiell kann die Halteeinrichtung auch starr oder steif sein, d.h. zu jedem Zeitpunkt eine Form und/oder Größe einnehmen, die auf die Form und/oder Größe der in der Aufblaskonfiguration befindlichen Gasleitung 13 im Bereich der Anbindung des Gasgenerators 11 abgestimmt ist.

Um je nach Ausgestaltung der Anordnung aus Öffnung 17 in der Gasleitungshülle 15 und Endstück 19 des Gasgenerators 11 die Gasdichtigkeit dieser Anordnung zu verbessern, ist bei jedem der hier beschriebenen Ausführungsbeispiele eine Dichtungsanordnung 27 vorgesehen. Die Ausführungsbeispiele unterscheiden sich insbesondere hinsichtlich der Ausgestaltung dieser Dichtungsanordnung 27.

Versuche haben gezeigt, dass sich eine sehr gute Abdichtung erzielen lässt, wenn als Dichtungsanordnung ein flacher Dichtring 27 verwendet wird, wie ihn insbesondere Fig. 2 in einer perspektivischen Ansicht zeigt. Im montierten Zustand gemäß Fig. 1 liegt der Dichtring 27 radial innen am außerhalb der Gasleitung 13 befindlichen Bereich des Gasgenerator-Endstücks 19 an. Des Weiteren besteht in radialer Richtung eine Überlappung zwischen dem Dichtring 27 und dem mittels der Stabilisierungseinrichtung 31 verstärkten Randbereich der Gasleitungshülle 15, der die Einführöffnung 17 für das Gasgenerator-Endstück 19 begrenzt. Diese Anordnung hat unter anderem den Vorteil, dass aufgrund der Überlappung zwischen verstärktem Randbereich und Dichtring 27 der Durchmesser der Öffnung 17 auf ein Minimum reduziert werden kann.

Der verstärkte Randbereich der Gasleitungshülle 15 und der Dichtring 27 können sich hierbei an dem radial vorstehenden, als Anschlag dienenden Wulst 25 des Gasgenerator-Endstücks 19 in axialer Richtung abstützen. Hierbei bilden gewissermaßen der Wulst 25 einerseits und die zur Fixierung des Fangbandes 21 dienende Schelle 23 andererseits zusammen eine Klemm- oder Spanneinrichtung, welche die Anordnung aus Dichtring 27, Lochverstärkung 31 und Gasleitungshülle 25 fest zusammenhält.

Diese Anordnung gewährleistet zum einen eine äußerst geringe Leckage und bildet somit die Grundlage für eine reproduzierbare Bereitstellung einer definierten Gasmenge zum Aufblasen des Luftsacks. Zum anderen sorgt diese Anordnung dafür, dass die Gasleitung 13 sicher am Gasgenerator 11 festgehalten wird, d.h. die erfindungsgemäße Anbindung des Gasgenerators 11 an die Gasleitung 13 verhindert beim Auslösen des Gasgenerators 11 ein "Wegblasen" der Gasleitung 13 bzw. - aus Sicht der Gasleitung 13 - ein "Ausspucken" des Gasgenerator-Endstücks 19. Diese Anordnung sorgt somit für eine ausreichende Gegenkraft, die derjenigen Kraft entgegenwirkt, die sich aus dem Produkt des innerhalb der Gasleitung 13 herrschenden, durch das Aufblasen ergebenden Drucks und der wirksamen Querschnittsfläche des Endstücks 19 des Gasgenerators 11 ergibt.

Die Verwendung des flachen Dichtringes 27 hat außerdem den Vorteil, dass sich ein derartiger Dichtring 27 aufgrund seiner geringen Höhe gut an die äußere Form der aufgeblasenen Gasleitung 13 anpassen kann, wie es die Querschnittsdarstellung in Fig.1 zeigt.

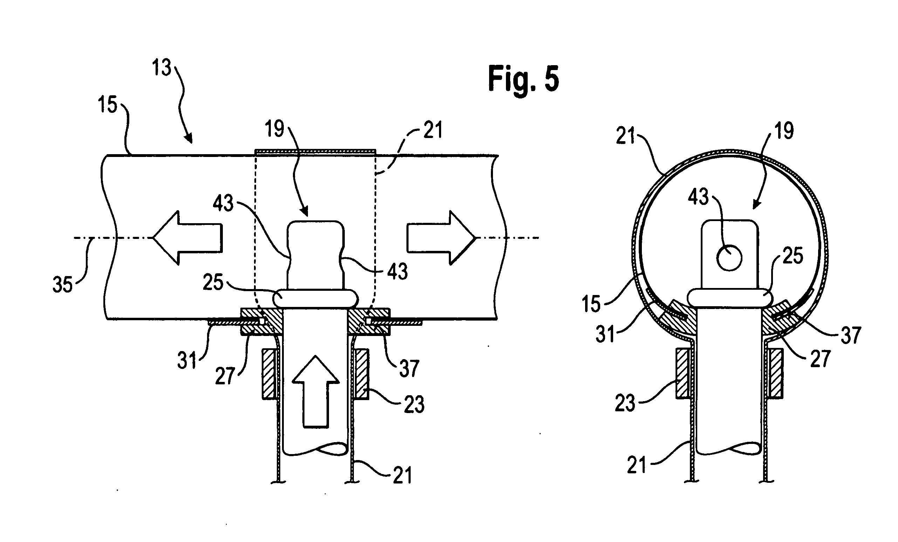

In dem Ausführungsbeispiel der Fig. 5 ist ebenfalls eine einteilige Dichtungsanordnung 27 vorgesehen, die wiederum einen Dichtring umfasst, der allerdings im Vergleich zu dem Dichtring im Ausführungsbeispiel der Fig. 1 und 2 eine größere Dicke aufweist. Der Dichtring 27 gemäß Fig. 5 ist auf seiner radialen Außenseite mit einer schlitz- oder nutförmigen Ausnehmung 37 versehen, die zur Aufnahme eines Teils des verstärkten Randbereiches der Gasleitungshülle 15 dient. Der in der Ausnehmung 37 befindliche Randbereich der Gasleitungshülle 15 kann mit dem Dichtring 27 verklebt werden.

Die in der Gasleitungshülle 15 ausgebildete Öffnung ist in diesem Ausführungsbeispiel größer ausgeführt, als es zum Einführen des Gasgenerator-Endstücks 19 erforderlich wäre. Gleichwohl lässt sich auch mit der in Fig. 5 dargestellten Anordnung eine zuverlässige Abdichtung im Bereich der Gasgeneratoranbindung erzielen.

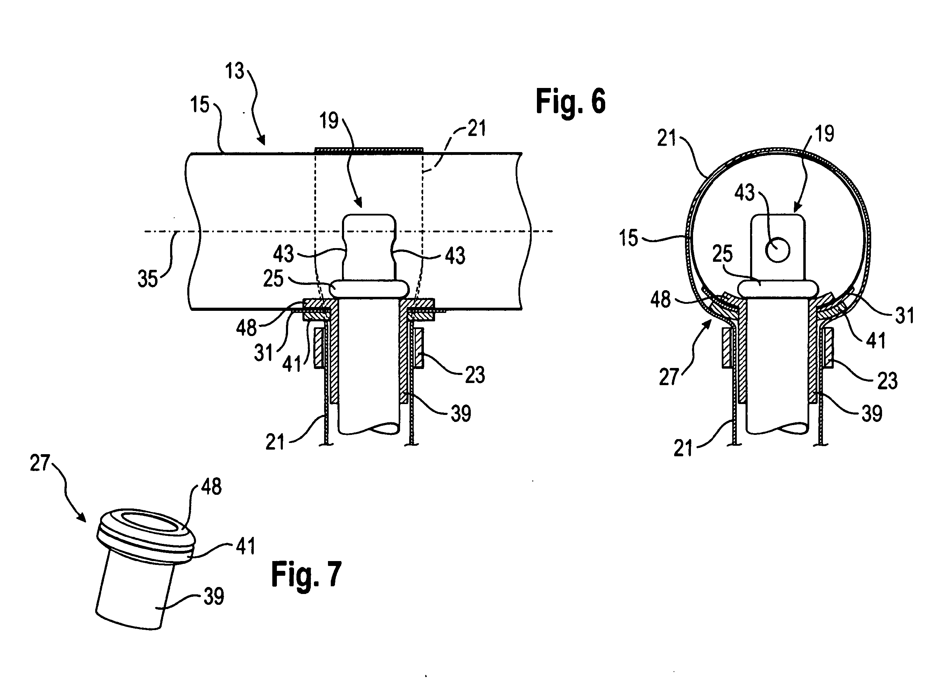

In dem Ausführungsbeispiel der Fig. 6 ist eine zweiteilige Dichtungsanordnung 27 vorgesehen, die einen Hülsenabschnitt 39 und einen Ringabschnitt 41 umfasst. Der Ringabschnitt 41 ist auf den Hülsenabschnitt 39 aufgeschoben und bildet mit einem an einem Ende des Hülsenabschnitts 47 einstückig ausgebildeten, radial vorstehenden Flansch 48 eine Aufnahme für den verstärkten Randbereich der Gasleitungshülle 15.

Hinsichtlich des Zusammenwirkens zwischen Ringabschnitt 41 und Flansch 48 des Hülsenabschnitts 39 ähnelt diese Dichtungsanordnung 27 somit dem an seiner radialen Außenseite geschlitzten Dichtring gemäß Fig. 5.

Die in Fig. 6 gezeigte Dichtungsanordnung 27 ist in Fig. 7 perspektivisch dargestellt. Anstelle der erwähnten zweiteiligen Ausgestaltung der Dichtungsanordnung 27 kann auch eine einteilige Ausführung vorgesehen sein.

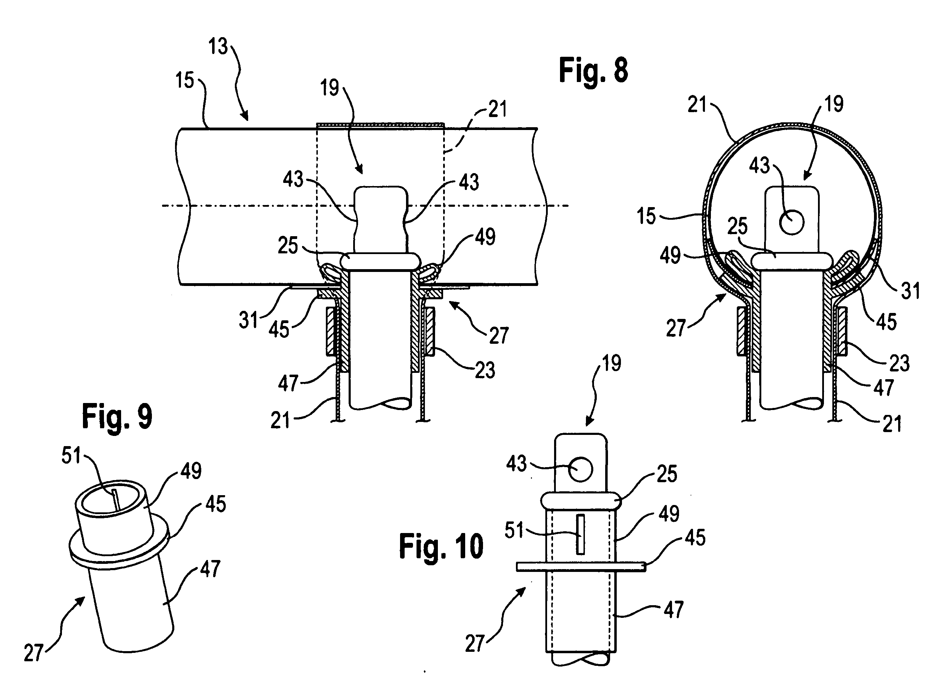

Die Dichtungsanordnung 27 gemäß dem Ausführungsbeispiel der Fig. 8 umfasst einen Hülsenabschnitt 47, der im montierten Zustand außerhalb der Gasleitung 13 gelegen ist. An diesen Hülsenabschnitt 47 schließt sich ein Dichtungsabschnitt 45 in Form eines radial vorstehenden, umlaufenden Flansches an. An diesen Flansch 45 wiederum schließt sich ein weiterer hülsenförmiger Abschnitt 49 an, dessen Wandung mit einer oder mehreren Schwächungen 51 in Form von schlitzförmigen, in axialer Richtung verlaufenden Aussparungen versehen ist. Der hülsenförmige Abschnitt 49 ist in radialer Richtung aufspreizbar und wird deshalb auch als Spreizabschnitt bezeichnet.

Fig. 9 zeigt eine perspektivische Ansicht dieser Dichtungsanordnung 27. Die hülsenförmigen Abschnitte 47 und 49 können hinsichtlich ihrer Durchmesser und/oder Wandstärken unterschiedlich ausgebildet sein, wobei dies aber nicht zwingend ist.

In Fig. 10 ist ein Vormontage-Zustand dargestellt, in welchem die Dichtungsanordnung 27 auf das Endstück 19 des Gasgenerators 11 aufgeschoben ist. Der Spreizabschnitt 49, der zwischen dem Dichtungsflansch 45 und dem Wulst 25 des Endstücks 19 gelegen ist, nimmt hier noch seine zylindrische Ausgangsform ein.

Bei der Montage wird der Abstand zwischen dem Wulst 25 und dem Dichtungsflansch 45 verringert, wodurch der aufgrund der Aussparungen 51 geschwächte Spreizabschnitt 49 zusammengestaucht wird und sich hierbei in radialer Richtung erweitert. Hierdurch entsteht aus dem Spreizabschnitt 49 ein weiterer radial vorstehender Flanschbereich, der mit dem Dichtungsflansch 45 derart zusammenwirkt, dass der verstärkte Randbereich der Gasleitungshülle 15 zwischen dem zusammengestauchten Spreizabschnitt 49 und dem Dichtungsflansch 45 eingeklemmt oder eingespannt ist.

Bei allen hier beschriebenen Ausführungsbeispielen kann vorgesehen sein, dass die Dichtungsanordnungen 27 mit der Gasleitungshülle 15, insbesondere im die Öffnung 17 begrenzenden verstärkten Randbereich, verklebt sind.

Die Erfindung stellt einen Gasanschluss zur Anbindung eines Gasgenerators 11 an eine flexible Gasleitung 13 bereit, der hinsichtlich Herstellung und Montage einfach und kostengünstig ist und gleichzeitig vor dem Hintergrund relativ hoher Drücke beim und nach dem Auslösen des Gasgenerators 11 einen zuverlässigen Halt der Gasleitung 13 auf dem Gasgenerator 11 und eine ausreichende Gasdichtigkeit im Bereich der Durchführung des Gasgenerator-Endstücks 19 durch die in der Gasleitungshülle 15 ausgebildete Öffnung 17 gewährleistet.

### Bezugszeichenliste

- 11: Gasgenerator
- 13: Gasleitung
- 15: Hülle der Gasleitung
- 17: Öffnung in der Gasleitungshülle
- 19: Gasaustrittsabschnitt, Endstück des Gasgenerators
- 21: Halteeinrichtung, Fangband, Manschette
- 23: Fixierreinrichtung, Schelle, Manschette
- 25: Anschlag, Dichtwulst
- 27: Dichtungsanordnung
- 31: Stabilisierungseinrichtung, Lochverstärkung
- 33: Luftsack
- 35: Längsachse der Gasleitung
- 37: Ausnehmung
- 39: Hülsenabschnitt
- 41: Ringabschnitt
- 43: Gasaustrittsöffnung
- 45: Dichtungsabschnitt
- 47: Hülsenabschnitt
- 48: Flansch
- 49: verformbarer Abschnitt, Spreizabschnitt
- 51: Schwächung, Aussparung

## Patentansprüche

1. Gasanschluss zur gasdichten Anbindung eines Gasgenerators (11) an eine flexible Gasleitung (13) einer Luftsackanordnung für Kraftfahrzeuge,
wobei in einer die Gasleitung (13) bildenden Hülle (15) eine Öffnung (17) ausgebildet ist, in die der Gasgenerator (11) mit einem, insbesondere im Wesentlichen eine kreiszylindrische Grundform aufweisenden, Gasaustrittsabschnitt (19) hineinragt, und wobei eine Halteeinrichtung (21) vorgesehen ist, welche die Gasleitung (13) im Bereich der Anbindung des Gasgenerators (11) an die Gasleitung (13) umgibt und am Gasgenerator (11) fixiert ist.

2. Gasanschluss nach Anspruch 1,
**dadurch gekennzeichnet,**
**dass** die Gasleitung (13) im aufgeblasenen Zustand zumindest im Bereich der Anbindung des Gasgenerators (11) einen im Wesentlichen kreisförmigen Querschnitt aufweist, wobei insbesondere die Gasleitung (13) von einem Schlauch gebildet ist.

3. Gasanschluss nach Anspruch 1 oder 2,
**dadurch gekennzeichnet,**
**dass** die Halteeinrichtung (21) über einen Umfangsbereich von mehr als etwa 90°, vorzugsweise von mehr als etwa 180°, insbesondere bevorzugt von mehr als etwa 270° an der in einer Aufblaskonfiguration befindlichen Gasleitung (13) anliegt.

4. Gasanschluss nach einem der vorhergehenden Ansprüche,
**dadurch gekennzeichnet,**
**dass** die Halteeinrichtung (21) als Fangband und/oder Manschette ausgebildet ist.

5. Gasanschluss nach einem der vorhergehenden Ansprüche,
**dadurch gekennzeichnet,**
**dass** zur Fixierung der Halteeinrichtung (21) am Gasgenerator (11) eine Fixiereinrichtung (23) vorgesehen ist, die außerhalb der Gasleitung (13) im Bereich der Öffnung (17) unter Zwischenlage der Halteeinrichtung (21) den Gasaustrittsabschnitt (19) des Gasgenerators (11) zumindest über einen Teilumfangsbereich umschließt, wobei insbesondere der Abstand der Fixiereinrichtung (23) von der Öffnung (17) zur Maximierung des Umfangsbereiches, über den die Halteeinrichtung (21) an der in einer Aufblaskonfiguration befindlichen Gasleitung (13) anliegt, minimiert ist.

6. Gasanschluss nach Anspruch 5,
**dadurch gekennzeichnet ,**
**dass** der Abstand der Fixiereinrichtung (23) von der Öffnung (17) veränderbar und/oder während der Montage innerhalb bestimmter Grenzen frei wählbar ist, und/oder dass die Fixiereinrichtung (23) als Schelle oder Manschette ausgebildet ist.

7. Gasanschluss nach Anspruch 5 oder 6,
**dadurch gekennzeichnet,**
**dass** der Gasaustrittsabschnitt (19) des Gasgenerators (11) einen innerhalb der Gasleitung (13) befindlichen, insbesondere radial vorspringenden, Anschlag (25) trägt, der mit der Fixiereinrichtung (23) eine Klemm- oder Spanneinrichtung zumindest für den die Öffnung (17) begrenzenden Randbereich der die Gasleitung (13) bildenden Hülle (15) und für die Halteeinrichtung (21) bildet.

8. Gasanschluss nach einem der vorhergehenden Ansprüche,
**dadurch gekennzeichnet,**
**dass** die Öffnung (17) bezüglich des Gasaustrittsabschnitts (19) des Gasgenerators (11) unterdimensioniert ist.

9. Gasanschluss nach einem der vorhergehenden Ansprüche,
**dadurch gekennzeichnet,**
**dass** die Hülle (15) der Gasleitung (13) im die Öffnung (17) begrenzenden Randbereich zusätzlich zu dem die Hülle (15) bildenden Material eine Dichtungsanordnung (27) umfasst, welche die Hindurchführung des Gasaustrittsabschnitts (19) des Gasgenerators (11) durch die Öffnung (17) abdichtet, wobei insbesondere die Dichtungsanordnung (27) zur Anpassung an die äußere Form der in einer Aufblaskonfiguration befindlichen Gasleitung (13) verformbar ist.

10. Gasanschluss nach Anspruch 9,
**dadurch gekennzeichnet,**
**dass** die Dichtungsanordnung (27) als, insbesondere flacher, Dichtring ausgebildet ist, der radial innen an der Außenseite des Gasaustrittsabschnitts (19) des Gasgenerators (11) anliegt und in radialer Richtung mit dem die Öffnung (17) begrenzenden Randbereich der Hülle (15) überlappt.

11. Gasanschluss nach Anspruch 9 oder 10,
**dadurch gekennzeichnet ,**
**dass** die Dichtungsanordnung (27), in radialer Richtung betrachtet, zwischen dem Rand der Öffnung (17) und der Außenseite des Gasaustrittsabschnitts (19) angeordnet ist, wobei insbesondere die Dichtungsanordnung (27) an ihrer radialen Außenseite zur Aufnahme des die Öffnung (17) begrenzenden Randbereiches ausgebildet ist.

12. Gasanschluss nach einem der Ansprüche 9 bis 11,
**dadurch gekennzeichnet,**
**dass** die Dichtungsanordnung (27) einen Abschnitt (49) aufweist, der durch eine axiale Verformungsbewegung in radialer Richtung erweiterbar ist, wobei insbesondere die Dichtungsanordnung (27) nach Art eines Spreizdübels ausgebildet ist.

13. Gasanschluss nach einem der vorhergehenden Ansprüche,
**dadurch gekennzeichnet,**
**dass** die Hülle (15) der Gasleitung (13) im die Öffnung (17) begrenzenden Randbereich zusätzlich zu dem die Hülle (15) bildenden Material eine Stabilisierungseinrichtung (31) für den Randbereich umfasst, die insbesondere dem Randbereich eine erhöhte Festigkeit und/oder Steifigkeit verleiht, wobei insbesondere die Stabilisierungseinrichtung (31) wenigstens einen zusätzlichen, insbesondere als ringförmige Lochverstärkung ausgebildeten, Materialabschnitt umfasst, der mit der Hülle (15) verbunden ist, insbesondere durch Verkleben.

14. Gasleitungsanordnung für in Kraftfahrzeugen eingesetzte Luftsackanordnungen, die wenigstens einen aufblasbaren Luftsack (33) und zumindest einen im am Fahrzeug montierten Zustand entfernt von dem Luftsack (33) angeordneten Gasgenerator (11) zum Aufblasen des Luftsacks (33) umfassen,
mit wenigstens einem Gasanschluss nach einem der vorhergehenden Ansprüche,
wobei die Gasleitung (13) zumindest im Wesentlichen außerhalb des Luftsacks (33) verläuft, eine freie Wegstrecke zwischen dem Gasgenerator (11) und dem Luftsack (33) überbrückt und zum Aufblasen des Luftsacks (33) mittels des Gasgenerators (11) dient, wobei insbesondere sie als Gasverteiler ausgebildet ist, mit dem wenigstens zwei Luftsäcke (33), insbesondere im Wesentlichen gleichzeitig, aufblasbar sind, wobei die Gasleitung (13) wenigstens zwei von dem Bereich der Anbindung des Gasgenerators (11) ausgehende Gasausbreitungswege bereitstellt.

15. Luftsackanordnung für Kraftfahrzeuge mit wenigstens einem aufblasbaren Luftsack (33) und zumindest einem Gasgenerator (11) zum Aufblasen des Luftsacks (33), und mit zumindest einer Gasleitungsanordnung nach Anspruch 14.

## Claims

1. Gas connection for gas-tight connection of a gas generator (11) at a flexible gas line (13) of an air bag assembly for motor vehicles,
wherein an opening (17) is formed in a casing (15) forming the gas line (13), into which the gas generator (11) protrudes with a gas outlet section (19), preferably having a substantially cylindrical basic shape, and wherein a holding device (21) is provided which surrounds the gas line (13) in the area of the connection of the gas generator (11) to the gas line (13) and is fixed at the gas generator (11).

2. Gas connection according to claim 1,
**characterized in that**
the gas line (13) in the inflated state comprises a substantially circular cross section at least in the area of the connection to the gas generator (11), preferably wherein the gas line (13) is formed by a tube.

3. Gas connection according to claim 1 or 2,
**characterized in that**
the holding device (21) is in contact with the gas line (13) being in an inflated configuration over a circumferential area of more than about 90°, preferably more than about 180°, in particular preferably more than about 270°.

4. Gas connection according to any of the preceding claims,
**characterized in that**
the holding device (21) is formed as a band and/or sleeve.

5. Gas connection according to any of the preceding claims,
**characterized in that**
a fixing device (23) is provided to secure the holding device (21) at the gas generator (11), which surrounds the gas outlet section (19) of the gas generator (11) at least over a partial circumferential area outside of the gas line (13) in the area of the opening (17) with the interposition of the holding device (21), preferably wherein the distance between the fixing device (23) and the opening (17) is minimized to maximize the circumferential area, over which the holding device (21) is in contact with the gas line (13) being in an inflated configuration.

6. Gas connection according to claim 5,
**characterized in that**
the distance between the fixing device (23) and the opening (17) is variable and/or freely selectable within certain limits during assembly, and/or the fixing device (23) is formed as a clamp or sleeve.

7. Gas connection according to claim 5 or 6,
**characterized in that**
the gas outlet section (19) of the gas generator (11) supports a stopper (25), provided inside the gas line (13), preferably radially projecting, which together with the fixing device (23) forms a clamping or clutching device at least for the periphery of the opening (17) of the casing (15) forming the gas line (13) and for the holding device (21).

8. Gas connection according to any of the preceding claims,
**characterized in that**
the opening (17) is undersized relative to the gas outlet section (19) of the gas generator (11).

9. Gas connection according to any of the preceding claims,
**characterized in that**
the casing (15) of the gas line (13) includes a sealing arrangement (27) in the periphery of the opening (17) in addition to the material forming the casing (15), which seals the passage of the gas outlet section (19) of the gas generator (11) through the opening (17), preferably wherein the sealing arrangement (27) is deformable to adapt to the external form of the gas line (13) being in an inflated configuration.

10. Gas connection according to claim 9,
**characterized in that**
the sealing arrangement (27) is formed as a sealing ring, preferably a flat sealing ring, which is in radially inside contact with the outside of the gas outlet section (19) of the gas generator (11) and overlaps radially with the periphery of the opening (17) of the casing (15).

11. Gas connection according to claim 9 or 10,
**characterized in that**
the sealing arrangement (27) is arranged in radial direction between the edge of the opening (17) and the outside of the gas outlet section (19), preferably wherein the sealing arrangement (27) is formed on its radial outside for receiving the periphery of the opening (17).

12. Gas connection to one of the claims 9 to 11,
**characterized in that**
the sealing arrangement (27) comprises a section (49) which is expandable by an axial deformation movement in a radial direction, preferably wherein the sealing arrangement (27) is formed in the manner of an expansion plug.

13. Gas connection according to any of the preceding claims,
**characterized in that**
the casing (15) of the gas line (13) in the circumferential area around the opening (17) in addition to the material forming the casing (15) includes a stabilizing device (31) for the circumferential area, which gives circumferential area increased firmness and/or stiffness, preferably wherein the stabilization device (31) includes at least one additional material section, preferably formed as an annular hole reinforcement, connected with the casing (15), preferably by gluing.

14. Gas pipe arrangement for air bag assemblies used in motor vehicles, including at least one inflatable air bag (33) and at least one gas generator (11) disposed remotely from the air bag (33) in the vehicle-mounted state for inflating the air bag (33),
having at least one gas connection according to any of the preceding claims,
wherein the gas line (13) is at least substantially outside of the airbag (33), bridges a free distance between the gas generator (11) and the air bag (33) and functions to inflate the air bag (33) using the gas generator (11), preferably wherein it is designed as a gas distributor, with which at least two air bags (33) are inflatable, preferably substantially simultaneously, wherein the gas line (13) provides at least two gas propagation paths extending from of the area of the connection of the gas generator (11).

15. Air bag assembly for motor vehicles with at least one inflatable air bag (33) and at least one gas generator (11) to inflate the air bag (33), and with at least one gas line arrangement according to claim 14.

## Revendications

1. Raccord à gaz pour la liaison étanche aux gaz d'un générateur de gaz (11) à un conduit de gaz flexible (13) d'un agencement de coussin gonflable pour véhicule automobile,
dans lequel une ouverture est ménagée dans une enveloppe (15) formant le conduit de gaz (13), ouverture dans laquelle pénètre le générateur de gaz (11) par un tronçon de sortie de gaz (19) présentant en particulier sensiblement une forme de base cylindrique circulaire, et dans lequel est prévu un moyen de maintien (21) qui entoure le conduit de gaz (13) dans la région de la liaison du générateur de gaz (11) au conduit de gaz (13) et qui est fixé au générateur de gaz (11).

2. Raccord à gaz selon la revendication 1,
**caractérisé en ce que** le conduit de gaz (13) présente à l'état gonflé au moins dans la région de la liaison du générateur de gaz (11) une section transversale sensiblement de forme circulaire, le conduit de gaz (13) étant en particulier formé par un tuyau flexible.

3. Raccord à gaz selon la revendication 1 ou 2,
**caractérisé en ce que** le moyen de maintien (21) s'applique contre le conduit de gaz (13) qui se trouve dans une configuration gonflée, sur une région périphérique de plus de 90°, de préférence de plus de 180°, et de façon particulièrement préférée de plus de 270° environ.

4. Raccord à gaz selon l'une des revendications précédentes,
**caractérisé en ce que** le moyen de maintien (21) est réalisé sous forme de ruban de retenue et/ou de manchette.

5. Raccord à gaz selon l'une des revendications précédentes,
**caractérisé en ce que**, pour fixer le moyen de maintien (21) sur le générateur de gaz (11), il est prévu un système de fixation (23) qui enferme le tronçon de sortie de gaz (19) du générateur de gaz (11) au moins sur une région partielle de la périphérie, à l'extérieur du conduit de gaz (13) dans la région de l'ouverture (17) avec interposition du moyen de maintien (21), et en particulier la distance du système de fixation (23) depuis l'ouverture (17) est minimisée pour maximiser la zone de la périphérie sur laquelle le moyen de maintien (21) est appliqué contre le conduit de gaz (13) qui se trouve dans une configuration gonflée.

6. Raccord à gaz selon la revendication 5,
**caractérisé en ce que** la distance du système de fixation (23) depuis l'ouverture (17) est variable et/ou peut être librement choisie pendant le montage à l'intérieur de certaines limites, et/ou **en ce que** le système de fixation (23) est réalisé sous forme de collier ou de manchette.

7. Raccord à gaz selon la revendication 5 ou 6,
**caractérisé en ce que** le tronçon de sortie de gaz (19) du générateur de gaz (11) porte une butée (25), en particulier en saillie radiale, qui se trouve à l'intérieur du conduit de gaz (13) et qui forme, conjointement avec le système de fixation (23), un moyen de coincement ou de serrage au moins pour la zone de bordure, qui délimite l'ouverture (17), de l'enveloppe (15) qui forme le conduit de gaz (13) et pour le moyen de maintien (21).

8. Raccord à gaz selon l'une des revendications précédentes,
**caractérisé en ce que** l'ouverture (17) est sous-dimensionnée par rapport au tronçon de sortie de gaz (19) du générateur de gaz (11).

9. Raccord à gaz selon l'une des revendications précédentes,
**caractérisé en ce que** l'enveloppe (18) du conduit de gaz (13) comprend, dans la zone de bordure qui délimite l'ouverture (17) et en supplément au matériau qui forme l'enveloppe (15), un agencement d'étanchéité (27) qui étanche la traversée du tronçon de sortie de gaz (19) du générateur de gaz (11) à travers l'ouverture (17), et en particulier l'agencement d'étanchéité (27) est déformable pour s'adapter à la forme extérieure du conduit de gaz (13) se trouvant dans une configuration gonflée.

10. Raccord à gaz selon la revendication 9,
**caractérisé en ce que** l'agencement d'étanchéité (27) est réalisé sous forme de bague d'étanchéité, en particulier plane, qui s'applique radialement à l'intérieur contre la face extérieure du tronçon de sortie de gaz (19) du générateur de gaz (11) et qui chevauche en direction radiale la zone de bordure de l'enveloppe (15) qui délimite l'ouverture (17).

11. Raccord à gaz selon la revendication 9 ou 10,
**caractérisé en ce que** l'agencement d'étanchéité (27), considéré en direction radiale, est agencé entre le bord de l'ouverture (17) et la face extérieure du tronçon de sortie de gaz (19), et en particulier l'agencement d'étanchéité (27) est réalisé, au niveau de sa face extérieure radiale, pour recevoir la zone de bordure qui délimite l'ouverture (17).

12. Raccord à gaz selon l'une des revendications 9 à 11,
**caractérisé en ce que** l'agencement d'étanchéité (27) comprend un tronçon (49) qui peut être élargi en direction radiale par un mouvement de déformation axial, et en particulier l'agencement d'étanchéité (27) est réalisé à la manière d'une cheville à écartement.

13. Raccord à gaz selon l'une des revendications précédentes,
**caractérisé en ce que** l'enveloppe (15) du conduit de gaz (13) comprend, dans la zone de bordure qui délimite l'ouverture (17) et en supplément au matériau formant l'enveloppe (15), un système de stabilisation (31) pour la zone de bordure, qui confère en particulier à la zone de bordure une solidité accrue et/ou une rigidité accrue, et en particulier le système de stabilisation (31) comprend au moins une portion de matériau additionnel, en particulier réalisée sous forme de renforcement à trous annulaire, qui est relié à l'enveloppe (15), en particulier par collage.

14. Agencement de conduit de gaz pour des agencements à coussins gonflables employés dans des véhicules automobiles, qui comprennent au moins un coussin à gaz gonflable (33) et un générateur de gaz (11), agencé, dans la situation montée sur le véhicule, à distance du coussin à gaz (33) et destiné à gonfler le coussin à gaz (33),
comprenant au moins un raccord à gaz selon l'une des revendications précédentes,
dans lequel le conduit de gaz (13) s'étend au moins sensiblement à l'extérieur du coussin à gaz (33), en comblant un trajet libre entre le générateur de gaz (11) et le coussin à gaz, et sert à gonfler le coussin à gaz (33) au moyen du générateur de gaz (11), le conduit de gaz étant en particulier réalisé sous forme de répartiteur de gaz avec lequel au moins deux coussins à gaz (33) peuvent être gonflés, en particulier sensiblement simultanément, et le conduit de gaz (13) constitue au moins deux trajets de propagation de gaz partant de la région de la liaison du générateur de gaz (11).

15. Agencement de coussin à gaz pour véhicules automobiles comprenant au moins un coussin à gaz gonflable (33) et au moins un générateur de gaz (11) pour gonfler le coussin à gaz (33), et comprenant au moins un agencement de conduit de gaz selon la revendication 14.
